**Europäisches Patentamt**

**European Patent Office**

**Office européen des brevets**

(11) Numéro de publication: **0 132 248**
**A2**

# (12) DEMANDE DE BREVET EUROPEEN

(21) Numéro de dépôt: **84870095.1**

(22) Date de dépôt: **06.07.84**

(51) Int. Cl.⁴: **B 05 D 3/02**
**C 03 C 17/28, F 26 B 3/30**
**F 26 B 21/14**

(30) Priorité: **14.07.83 LU 84911**

(43) Date de publication de la demande:
**23.01.85 Bulletin 85/4**

(84) Etats contractants désignés:
**AT BE CH DE FR GB IT LI NL SE**

(71) Demandeur: **COCKERILL SAMBRE Société Anonyme dite:**
**Avenue Adolphe Greiner, 1**
**B-4100 Liege (Seraing)(BE)**

(72) Inventeur: **Lemaire, Jean-Paul**
**Avenue des Perdrix, 3**
**B-4121 Neuville en Condroz(BE)**

(72) Inventeur: **Renard,Lucien**
**Rue Forrière, 82**
**B-4100 Seraing(BE)**

(74) Mandataire: **De Brabanter, Maurice et al,**
**Bureau VANDER HAEGHEN 63 Avenue de la Toison d'Or**
**B-1060 Bruxelles(BE)**

(54) **Procédé et installation de cuisson d'un revêtement organique appliqué sur un support.**

(57) Un revêtement organique appliqué sur un support, tel qu'une feuille de verre ou d'acier, est cuit dans une atmosphère d'un gaz inerte, tel que de l'azote, au moyen de rayons infrarouges à courte longueur d'onde, de préférence à haute intensité, de préférence plus de 100 kilowatts par m². Les vapeurs provenant des solvants contenus dans le revêtement organique sont condensés.

L'installation de cuisson comprend une enceinte (10) étanche à l'air et équipée de moyens (14) pour y maintenir une atmosphère d'un gaz inerte, des moyens pour y déplacer le support muni d'un revêtement organique, des moyens (15, 16) pour y faire circuler le gaz inerte, des moyens de chauffage infrarouge (20, 21) et des moyens (17) pour condenser les solvants organiques évaporés du revêtement organique.

FIG. 1

EP 0 132 248 A2

## PROCEDE ET INSTALLATION DE CUISSON D'UN REVETEMENT ORGANIQUE APPLIQUE SUR UN SUPPORT.

La présente invention est relative à un procédé et à une installation de cuisson d'un revêtement organique appliqué sur un support, tel qu'un support en verre ou en métal, par exemple une feuille de verre ou une bande d'acier.

Il est connu de munir la surface de supports, tels qu'une bande métallique, d'au moins un revêtement organique, tel que, par exemple, un vernis, une peinture ou un adhésif contenant un solvant par exemple organique, afin d'en améliorer l'aspect esthétique et la résistance à la corrosion.

L'obtention d'un support muni d'un tel revêtement organique implique un certain nombre d'opérations successives comprenant, entre autres, la cuisson du revêtement organique.

La cuisson de revêtements organiques appliqués sur un support se fait habituellement dans un four par exemple du type à convection à l'aide d'un mélange de gaz de combustion et d'air. L'atmosphère de ce four est portée en moyenne à une température d'environ 350° C et cette atmosphère doit être renouvelée pour assurer que sa concentration en solvants organiques provenant de l'évaporation de ceux-ci au cours de la cuisson des revêtements organiques reste bien en deça de la limite inférieure d'explosibilité des solvants dans l'air. Généralement, on renouvelle l'air dans le four, de façon que la teneur en solvants organiques de l'atmosphère de ce four ne dépasse pas 25% de la limite inférieure d'explosibilité des solvants organiques dans l'air, ce qui correspond à une concentration d'environ 0,4% en volume de solvants.

Au surplus, les gaz évacués du four doivent passer dans un incinérateur destiné à assurer leur dépollution avant leur rejet dans l'atmosphère. La température d'incinération est généralement de l'ordre de 870° C.

Le bilan energétique de la cuisson d'un revêtement organique appliqué sur un support dans un four à convection au moyen de gaz de combustion et d'air est extrêmement défavorable. En effet, une proportion importante de la chaleur est consommée en pratique pour chauffer à haute température un débit élevé d'air, en comparaison de la quantité de chaleur utile nécessaire pour chauffer le support et évaporer les solvants organiques du revêtement appliqué sur ce support. On estime que cette dépense de calories improductives est d'environ 300% de la dépense de calories nécessaire pour chauffer le support et évaporer les solvants.

Pour améliorer ce bilan énergétique, on a déjà proposé d'effectuer la cuisson de revêtements organiques appliqués sur des supports, tels qu'une bande d'acier, à l'aide d'un gaz inerte chaud, c'est-à-dire d'un gaz non oxydant et non réducteur qui ne forme pas de mélange explosif avec les solvants organiques. Ainsi, on a proposé d'effectuer la cuisson de revêtements organiques avec de l'azote à une température de l'ordre de 350° C. Ce procédé connu a cependant l'inconvénient d'exiger des investissements considérables. En effet, il exige, pour sa mise en oeuvre, l'emploi d'échangeurs de chaleur pour porter l'azote à la température de cuisson et l'emploi de fours d'une longueur importante, dont l'exploitation est difficile à cause de leur volume (problème des purges) et de leur manque de flexibilité (inertie thermique importante).

Au lieu d'utiliser des gaz chauds, c'est-à-dire un mélange d'air et de gaz de combustion ou de l'azote, on a également proposé d'effectuer la cuisson de revêtements organiques appliqués sur des supports métalliques dans un four

à balayage d'air, au moyen de rayons infrarouges.

Compte tenu de la nécessité d'incinérer l'atmosphère de balayage du four, ce procédé nécessite des consommations d'énergie globales pratiquement indentiques à celles du procédé de cuisson dans un four à convection, auquel il a été fait référence plus haut.

Or, on a constaté à présent que l'on obtient des résultats étonnamment remarquables en effectuant la cuisson de revêtements organiques au moyen de rayons infra-rouges dans une atmosphère d'un gaz inerte.

La présente invention concerne, par conséquent, un procédé de cuisson de revêtements organiques appliqués sur des supports, tels que des supports en métal ou en verre, caractérisé en ce qu'on effectue la cuisson desdits revêtements dans une atmosphère d'un gaz inerte, au moyen de rayons infrarouges à courte longueur d'onde, dont la radiance maximale se situe à une longueur d'onde inférieure à 2 microns environ.

Dans une forme de réalisation avantageuse du procédé suivant l'invention, on utilise un rayonnement infrarouge à haute densité, de préférence de plus de 100 kilowatts par m2 sur une face du support.

Comme gaz inerte, on utilise, de préférence, de l'azote, bien que l'emploi d'autres gaz non oxydants et non réducteurs soit possible.

Suivant une autre particularité de l'invention, on récupère les solvants organiques recueillis dans l'atmosphère de gaz inerte par condensation de ces solvants.

Le procédé suivant l'invention offre de nombreux avantages, si on le compare aux procédés connus évoqués plus haut. Ainsi, le procédé suivant l'invention permet un chauffage tellement pénétrant des revêtements que la cuisson de ceux-ci s'opère à partir de l'interface entre ces revêtements et leurs supports, ce qui empêche la formation de boursouflures dans les revêtements tout en assurant une température

4

de cuisson élevée qui permet d'augmenter fortement la vitesse de cuisson de ces revêtements.

Par ailleurs, le procédé suivant l'invention est avantageux en ce qui concerne la consommation énergétique et la qualité des revêtements obtenues.

Ces avantages ressortent des essais comparatifs suivant :

Pour ces essais, on a utilisé une feuille d'acier de 0,2 mm d'épaisseur recouverte d'une mince couche d'alliage fer-étain, c'est-à-dire une feuille d'acier couramment utilisée dans les emballages métalliques légers.

Deux types de revêtements organiques ont été appliqués sur la feuille métallique, à savoir :
- un vernis époxy-phénolique transparent contenant des solvants organiques, appliqué à raison de 4 à 5 grammes sec par $m^2$ (extrait sec : 36 % en poids;
- une peinture acrylique blanche contenant un solvant organique, appliquée à raison de 14 à 16 grammes par $m^2$ (extrait sec : 56%).

Ces deux revêtements appliqués chacun sur les deux faces des feuilles d'acier ont été soumis à étuvage rapide respectivement à 280° C et à 265° C (températures du métal).

Dans un premier essai de cuisson des deux revêtements dans un four classique à convection, dont l'atmosphère a été portée en moyenne à une température d'environ 350° C, on a constaté qu'il fallait une consommation d'au moins 0,25 $kwh/m^2$ pour la cuisson du vernis et d'au moins 0,32 $kwh/m^2$ pour la cuisson de la peinture acrylique.

Dans un second essai de cuisson des deux revêtements dans un four à atmosphère d'air, dans lequel une face des revêtements a été chauffée par un rayonnement infrarouge à densité de 134 $kw/m^2$, on a consommé 0,10 $kwh/m^2$ pour la cuisson du vernis transparent à une vitesse d'avancement du support portant ce vernis de 22,2 mètres/minute et 0,13 $kwh/m^2$

pour la cuisson de la peinture blanche à une vitesse d'avancement de la feuille ou bande d'acier portant cette peinture de 17,1 mètres/minute. Bien que la consommation d'énergie ait été sensiblement moindre dans des essais de cuisson par rayons infrarouges en atmosphère d'air, on arrive à des consommations énergétiques globales pratiquement identiques à celles obtenues dans les essais de cuisson dans le four à convection, en tenant compte du fait que l'air de balayage du four à cuisson infrarouge doit également être incinéré.

Dans un troisième essai, on a opéré dans les mêmes conditions que dans le second essai, si ce n'est que l'atmosphère (air) du four a été remplacée par de l'azote. Dans ce troisième essai conforme au procédé suivant la présente invention, on a utilisé la même quantité d'énergie électrique que dans le second essai, mais l'emploi d'azote au lieu d'air dans le four a permis d'atteindre dans le four des teneurs élevées en solvants qui ont pu être récupérés par condensation. L'énergie calorifique qui pourrait être recueillie par combustion de ces solvants serait de 0,1737 $kwh/m^2$ dans le cas du vernis transparent et de 0,2316 $kwh/m^2$ dans le cas de la peinture acrylique blanche.

On voit ainsi que l'énergie potentielle récupérée à partir des solvants organiques condensés est supérieure à l'énergie électrique (0,10 et 0,13 $kwh/m^2$) utilisée pour la cuisson. Ce bilan énergétique positif du procédé suivant la présente invention constitue un avantage majeur de ce procédé.

Comparé aux procédés connus antérieurement, le procédé suivant l'invention présente également des avantages inattendus en ce qui concerne la qualité des revêtements cuits.

Ainsi, le procédé suivant l'invention permet d'obtenir des revêtements cuits exempts de boursouflures, alors que les procédé connus de cuisson dans un four à convection à atmosphère d'air ou d'azote donnent des revêtements présentant des boursouflures en cas de cuisson rapide.

Par ailleurs, le degré de réticulation des revêtements cuits par le procédé suivant l'invention est étonnamment meilleur que celui des revêtements cuits dans un four à convection sous atmosphère d'air ou d'azote. Ce degré de réticulation a été déterminé par l'essai dénommé "Rub Test" consistant à soumettre un revêtement organique cuit appliqué sur un support à une série d'essuyages au moyen d'un tampon d'ouate imbibé de méthyléthylcétone, en comptant le nombre d'essuyages nécessaires pour voir apparaître le support. Dans le cas de la peinture acrylique blanche précitée, on a constaté que le nombre d'essuyages n'était que de 10 à 15 après cuisson du revêtement de cette peinture pendant 15 minutes à 185° C, 195° C et même 205° C sous une atmosphère d'air. Par contre, le nombre d'essuyages était supérieur à 100, dans le cas où, conformément à la présente invention, le revêtement de peinture acrylique blanche a été cuit, sous une atmosphère d'azote, dans un four chauffé par un rayonnement infrarouge d'une densité de 134 kw/m$^2$.

On peut donc supposer qu'outre son effet thermique, le rayonnement infrarouge de courte longueur d'onde exerce un effet de photoréticulation sur certains types de revêtements organiques.

La présente invention est également relative à une installation pour la mise en oeuvre du procédé de cuisson de revêtements organiques appliqués sur un support, tel qu'un support de verre ou de métal, notamment une bande d'acier.

L'installation suivant l'invention est essentiellement caractérisée en ce qu'elle comprend une enceinte qui est sensiblement étanche à l'air et qui est équipée de moyens pour y maintenir une atmosphère d'un gaz inerte, des moyens pour déplacer un support muni d'un revêtement organique d'une entrée située à une extrémité de l'enceinte à une sortie située à l'autre extrémité de cette enceinte, des moyens pour faire circuler le gaz inerte dans l'enceinte précitée autour du support muni du revêtement organique, des moyens de chauffage infrarouge à courte longueur d'onde disposés en regard du revêtement organique susdit et des moyens pour condenser les solvants organiques évaporés du revêtement organique par lesdits moyens de chauffage.

D'autres particularités et détails de l'installation suivant l'invention ressortiront de la description suivante, dans laquelle il est fait référence aux dessins ci-annexés qui montrent, à titre d'exemples illustratifs et non limitatifs, deux formes de réalisation d'une installation suivant l'invention.

Dans ces dessins :

- la figure 1 est une coupe longitudinale d'une première forme de réalisation d'une installation de cuisson selon l'invention;
- la figure 2 est une coupe suivant la ligne II-II de la figure 1, et
- la figure 3 est une coupe longitudinale analogue à celle de la figure 1 montrant une seconde forme de réalisation d'une installation de cuisson suivant l'invention.

Dans ces différentes figures, les mêmes notations de référence désignent des éléments identiques.

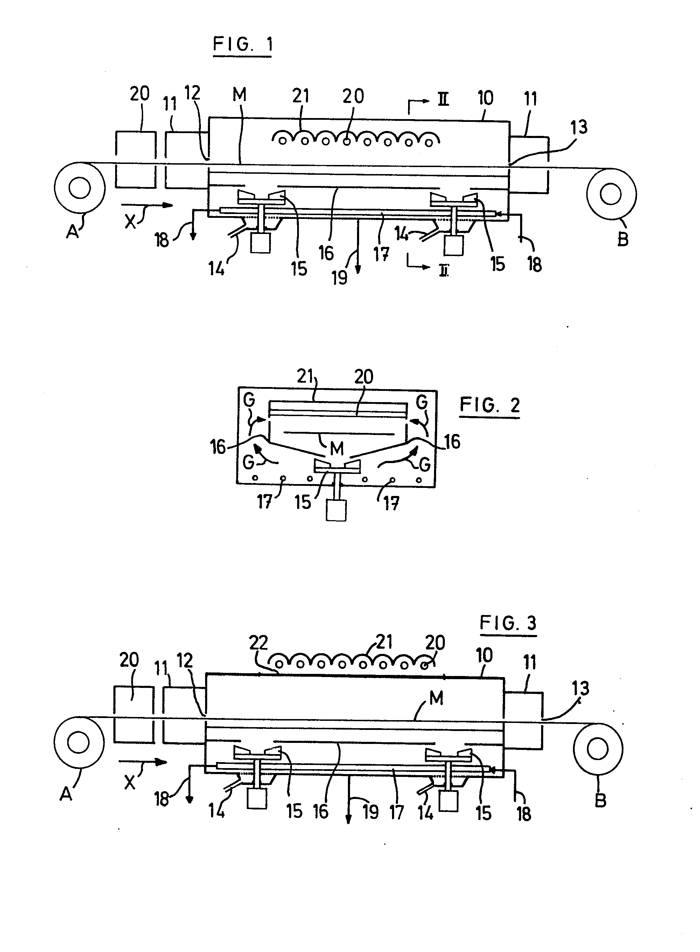

Dans les formes de réalisation montrées aux figures 1 à 3 d'installation de cuisson suivant l'invention, celles-ci sont utilisées pour la cuisson d'un revêtement organique, tel qu'un vernis ou une peinture, appliqué sur une bande métallique M.

Il va de soi que l'installation suivant l'invention peut être adaptée pour la cuisson d'un revêtement organique contenant un solvant appliqué sur un support en verre ou en une autre matière résistant à la température de cuisson du revêtement.

La bande métallique M est déplacée, dans le sens de la flèche X, entre une dérouleuse A et une enrouleuse B disposées à l'extérieur d'une enceinte hermétique 10 formant un four de cuisson. Avant de pénétrer dans le four 10, la bande M traverse un poste 20 de préparation de la bande et d'application d'un revêtement organique sur la face supérieure de cette bande. Ce poste est connu en soi et peut être d'un type connu quelconque. A chaque extrémité du four 10 est prévu un sas 11 permettant à la bande M d'entrer en 12 dans le four 10 et d'en sortir en 13, sans que de l'air y soit admis.

Un gaz de protection inerte, tel que de l'azote, est introduit dans le four par au moins une tubulure 14. Une circulation adéquate de ce gaz inerte autour de la bande métallique est assurée par des ventilateurs 15.

Comme le montre la figure 2, la bande M défile, dans le four de cuisson 10, dans une zone entourée de déflecteurs 16 destinés à assurer la circulation du gaz inerte dans le sens des flèches G.

A sa partie inférieure, le four 10 est équipé de tubes condenseurs 17 dans lesquels circule un liquide réfrigérant, tel que de l'eau, parcourant un circuit désigné par la notation de référence 18. Les tubes condenseurs 17 servent à condenser les solvants évaporés du revêtement organique porté par la bande M dans le four de cuisson 10. Les solvants condensés sont récupérés par une conduite 19.

La cuisson du revêtement de la bande M est assurée par un dispositif de chauffage infrarouge comportant des radiants 20 munis de réflecteurs 21.

Dans la forme de réalisation de l'installation selon l'invention montrée aux figures 1 et 2, le dispositif de chauffage infrarouge est monté à l'intérieur du four 10 au-dessus du trajet suivi par la bande M. Par contre, dans la forme de réalisation montrée à la figure 3, ce dispositif de chauffage est monté à l'extérieur du four 10, au-dessus d'une paroi supérieure 22 en une matière perméable aux rayons infrarouges, par exemple en quarz.

9

0132248

Le montage du dispositif de chauffage infrarouge à l'extérieur du four 10, comme montré à la figure 3, offre l'avantage de permettre un dépannage et un entretien aisés des sources de rayons infrarouges 20. De plus, aucun dépôt de carbone ne risque de se former sur les radiants 20 et les réflecteurs 21.

Au lieu d'être constitué de tubes condensateurs 17 montés dans le four 10, un dispositif de condensation des solvants évaporés peut être prévu en dehors du four 10, le gaz inerte chargé de vapeurs des solvants étant amené par les ventilateurs 15 dans le dispositif de condensation.

## REVENDICATIONS

1. Procédé de cuisson d'un revêtement organique appliqué sur un support, caractérisé en ce qu'on effectue la cuisson desdits revêtements dans une atmosphère d'un gaz inerte, au moyen de rayons infrarouges à courte longueur d'onde.

2. Procédé suivant la revendication 1, caractérisé en ce qu'on utilise un rayonnement infrarouge ayant une longueur d'onde à radiance maximale inférieure à environ 2 microns.

3. Procédé suivant l'une quelconque des revendications 1 et 2, caractérisé en ce qu'on utilise un rayonnement infrarouge à haute densité.

4. Procédé suivant la revendication 3, caractérisé en ce que la densité du rayonnement infrarouge est supérieure à environ 100 kilowatts par m$^2$ sur une face du support.

5. Procédé suivant l'une quelconque des revendications précédentes, caractérisé en ce que l'atmosphère de gaz inerte est constituée d'azote.

6. Procédé suivant l'une quelconque des revendications précédentes, caractérisé en ce qu'on condense les vapeurs de solvants extraites du revêtement.

7. Procédé suivant l'une quelconque des revendications précédentes, caractérisé en ce que le support susdit est une bande métallique.

8. Procédé suivant l'une quelconque des revendications 1 à 6, caractérisé en ce que le support susdit est une feuille de verre.

9. Procédé suivant l'une quelconque des revendications précédentes, caractérisé en ce que le revêtement est choisi parmi les vernis, les peintures et les adhésifs contenant des solvants organiques.

10. Installation pour la mise en verre du procédé suivant l'une quelconque des revendications 1 à 9, caractérisée en ce qu'elle comprend une enceinte (10) qui est sensiblement étanche à l'air et qui est équipée de moyens (14) pour y maintenir une atmosphère d'un gaz inerte, des moyens pour déplacer un support (M) muni d'un revêtement organique d'une entrée (12) située à une extrémité de l'enceinte à une sortie (13) située à l'autre extrémité de cette enceinte (10), des moyens (15,16) pour faire circuler le gaz inerte dans l'enceinte précitée (10) autour du support (M) muni du revêtement organique, des moyens de chauffage infrarouge (20,21) à courte longueur d'onde disposés en regard du revêtement organique susdit et des moyens (17) pour condenser les solvants organiques évaporés du revêtement organique par lesdits moyens de chauffage (20).

11. Installation suivant la revendication 10, caractérisée en ce que les moyens (15,16) pour faire circuler le gaz inerte autour du support précité (M) comprennent des déflecteurs (16) s'étendant de part et d'autre du trajet du support (M) et un ventilateur (15) disposé à proximité de chaque extrémité des déflecteurs.

12. Installation suivant l'une quelconque des revendications 10 et 11, caractérisée en ce que les moyens de condensation des solvants (17) sont constitués par un échangeur de chaleur (17) monté dans la partie inférieure de l'enceinte susdite (10).

13. Installation suivant l'une quelconque des revendications 10 et 11, caractérisée en ce que les moyens (17) de condensation des solvants sont montés à l'extérieur de l'enceinte susdite.

14. Installation suivant l'une quelconque des revendications 10 à 13, caractérisée en ce que les moyens de chauffage infrarouge (20,21) sont montés dans l'enceinte susdite (10 - Fig.3).

15. Installation suivant l'une quelconque des revendications 10 à 13, caractérisée en ce que les moyens de chauffage infrarouge (20,21) sont montés à l'extérieur de l'enceinte susdite (10) en regard d'une paroi (22) perméable aux rayons infrarouges de cette enceinte.

16. Installation suivant l'une quelconque des revendications 10 à 15, caractérisée en ce que les moyens (20,21) de chauffage infrarouge comprennent des radiants (20) et des réflecteurs (21).

FIG. 1

FIG. 2

FIG. 3